# EUROPEAN PATENT APPLICATION

(11) **EP 3 669 701 A1**
(43) Date of publication of application: **24.06.2020**
(21) Application number: 19216729.4
(22) Date of filing: 16.12.2019
(51) Int. Cl.: A46B 3/16, A46B 9/04, A46D 3/04, A46D 1/00

(54) **TOOTHBRUSH BRISTLE**

(30) Priority: 20.12.2018 US 201816228133
(71) Applicant: Sunstar Americas, Inc., Schaumburg, IL 60195 (US)
(72) Inventor: Watcharotone, Supinda, Oak Park, IL Illinois 60302 (US); Gonzalez, Leoncio Angel, Winfield, IL Illinois 60190 (US)
(74) Representative: Barker Brettell LLP

(57) **Abstract**

A toothbrush (100) comprises a handle (120), a head (110) connected to the handle and a plurality of bristles (113). Respective ones (600a, 600b) of the plurality of bristles include a first end (620a, 620b) having a first shape formed by an end-rounding process, a second end (630) having a second shape, and a substantially cylindrical shaft (610) extending between the first end and the second end. The bristles are fastened to the head by a fastener (720) at a fastening point (714) along the shaft, the fastening point being located nearer to the second end than to the first end such that the first end extends from a surface of the head to a first height and the second end extends from the surface of the head to a second height. The first height is greater than the second height.

## Description

### BACKGROUND

### 1. Field of the Disclosure

This application relates generally to a bristle for a toothbrush. More specifically, this application relates to a bristle for a toothbrush that is subject to a particular processing at one end of the bristle, as well as an asymmetric ("J-hook") tufting arrangement therefor.

### 2. Description of Related Art

Toothbrushes generally include a plurality of bristles to remove dental plaque and clean teeth, including the gaps between neighboring teeth and the gaps between the teeth and gums. During one method of toothbrush manufacture, the bristles are shaped, grouped into bristle tufts, bent, and implanted in tuft holes of a head of the toothbrush by an anchor, such as a staple, which is located between the two ends of a bristle. Thus, both ends of each bristle extend away from the surface of the toothbrush head so as to clean teeth during use.

Existing toothbrushes often have difficulty penetrating the gaps between neighboring teeth (interproximal access) and the gaps between the teeth and gums (subgingival access), due at least in part to the bristle shape. Accordingly, there exists a need for an improved toothbrush bristle.

### BRIEF SUMMARY OF THE DISCLOSURE

Various aspects of the present disclosure relate to toothbrush bristles, toothbrushes, and methods of manufacturing the same.

In one exemplary aspect of the present disclosure, there is provided a toothbrush, comprising: a handle; a head connected to the handle; and a plurality of bristles, respective ones of the plurality of bristles including: a first end having a first shape formed by an end-rounding process, a second end having a second shape, and a substantially cylindrical shaft extending between the first end and the second end, wherein respective ones of the plurality of bristles are fastened to the head by a fastener at a fastening point along the shaft, the fastening point being located nearer to the second end than to the first end such that the first end extends from a surface of the head to a first height and the second end extends from the surface of the head to a second height, and wherein the first height is greater than the second height.

In another exemplary aspect of the present disclosure, there is provided a method of manufacturing a toothbrush, comprising: providing a plurality of unshaped bristles, respective ones of the plurality of unshaped bristles having a first end, a second end, and a substantially cylindrical shaft between the first end and the second end; attaching the respective ones of the plurality of unshaped bristles to a head of the toothbrush using a fastener at a fastening point along the shaft, the fastening point being located nearer to the second end than to the first end such that the first end extends from a surface of the head to a first height and the second end extends from the surface of the head to a second height; and performing an end-rounding process on the first end of the respective ones of the plurality of unshaped bristles, thereby to create a plurality of shaped bristles, wherein the first height is greater than the second height.

In another exemplary aspect of the present disclosure, there is provided a toothbrush, comprising: a handle; a head connected to the handle; and a plurality of bristles, respective ones of the plurality of bristles including: a first end having a first shape formed by a feathering process, a second end having a second shape, and a substantially cylindrical shaft extending between the first end and the second end, wherein respective ones of the plurality of bristles are fastened to the head by a fastener at a fastening point along the shaft, the fastening point being located nearer to the second end than to the first end such that the first end extends from a surface of the head to a first height and the second end extends from the surface of the head to a second height, and wherein the first height is greater than the second height.

This disclosure can be embodied in various forms. The foregoing summary is intended solely to give a general description of various aspects of the present disclosure, and does not limit the scope of the disclosure in any way.

### DESCRIPTION OF THE DRAWINGS

These and other more detailed and specific features of various embodiments are more fully disclosed in the following description, reference being had to the accompanying drawings, in which:
FIG. 1 illustrates several views of an exemplary toothbrush according to various aspects of the present disclosure;
FIG. 2 illustrates a bristle tuft arrangement for the exemplary toothbrush of FIG. 1;
FIG. 3 illustrates several views of another exemplary toothbrush according to various aspects of the present disclosure;
FIG. 4 illustrates several views of another exemplary toothbrush according to various aspects of the present disclosure;
FIG. 5 illustrates a partial cross-sectional view of the above exemplary toothbrushes;
FIG. 6A and FIG. 6B illustrate a partial view of exemplary bristles for use with various aspects of the present disclosure;
FIG. 7 illustrates an exemplary bristle arrangement for use with various aspects of the present disclosure;
FIG. 8 illustrates a comparative efficacy of various aspects of the present disclosure; and
FIG. 9 illustrates a partial view of another exemplary bristle for use with various aspects of the present disclosure.

### DETAILED DESCRIPTION

In the following description, numerous details are set forth. It will be readily apparent to one skilled in the art that these specific details are merely exemplary and not intended to limit the scope of this disclosure.

### Toothbrushes

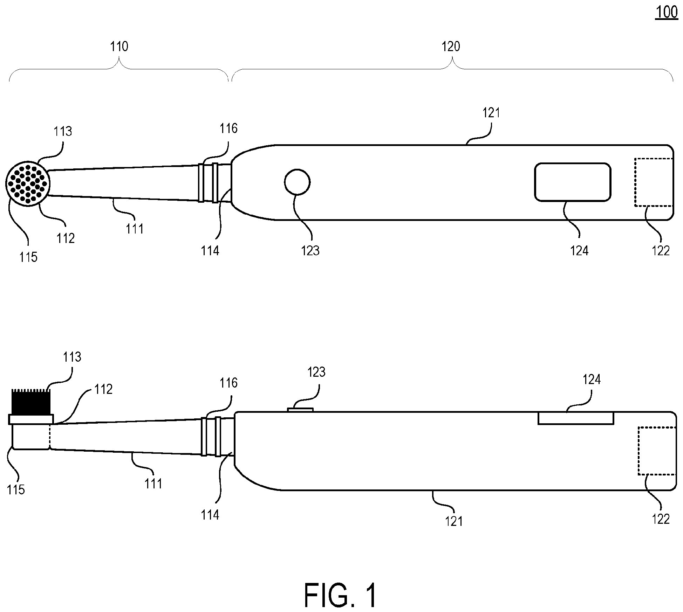

FIG. 1 illustrates an exemplary toothbrush 100 according to various aspects of the present disclosure in both a top plan view and a front elevational view. More particularly, the toothbrush 100 is a rechargeable power toothbrush. The toothbrush 100 includes a bristle head section 110 (one example of a "head") and a body section 120 (one example of a "handle") that are removably attached to one another. The bristle head section 110 comprises a transmission housing 111, an oscillatory rotating disk 112, and a plurality of bristle tufts 113. The transmission housing 111 extends longitudinally from a handle end 114 to a head end 115. The handle end 114 is configured to connect to the body section 120. The head end 115 is configured to support the rotating disk 112. The transmission housing 111 may include one or more (as illustrated, two) circumferential ridges 116, which may act as a grip to assist in the attachment and removal of the bristle head section 110 to/from the body section 120 by a user of the toothbrush 100. The transmission housing 111 defines an internal cavity, which may include a mechanism adapted to receive a shaft associated with the body section 120 and convert motion of the shaft into an oscillation of the rotating disk 112.

The body section 120 comprises a housing 121 and a charging section 122. The charging section 122 may be an induction charger, a USB charging port, a power adapter socket, and the like, and includes or is operatively connected to a rechargeable battery. One or more of a power switch 123 and an indicator section 124 may be disposed on the housing 121. The power switch 123 may be a push-button type, a slide-actuator type, a rocker type, a touch-sensing type, and the like. When actuated, the power switch 123 causes power to be supplied from the charging section 122 to a motor disposed within the housing 121 to generate motion, such as oscillatory motion. This motion may then be translated to the bristle head section 110, for example by the shaft described above. The indicator section 124 may include one or more indicators, such as LEDs, an LCD display, and/or an audio device. Thus, the indicator section 124 may provide audio, visual, or haptic feedback to the user of the toothbrush 100. This feedback may be indicative of a status of the rechargeable battery (charging / low / full), an activation state of the toothbrush 100 (on / off), and the like.

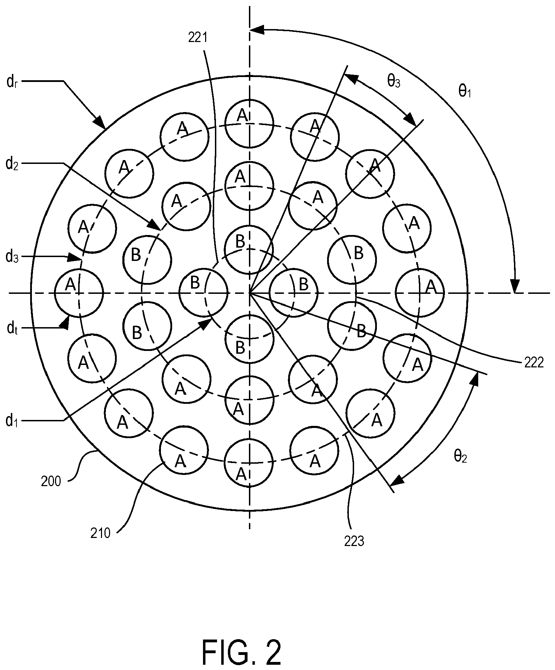

FIG. 2 illustrates a rotating disk 200 (which may be, for example, the rotating disk 112) in detail in a top plan view thereof. The rotating disk 200 includes a plurality of bristle tufts 210 disposed in an upper surface thereof, which are categorized as either A-type tufts or B-type tufts based on their location along the upper surface. Each bristle tuft 210 includes a plurality (for example, 12 to 42) of bristles (which may be, for example, the bristles 113) of a uniform dimension, but the dimension depends on whether the bristle tuft 210 is an A-type tuft or a B-type tuft. Each bristle tuft 210 is attached to the rotating disk 200 at an intermediate point between the ends of the bristles. In this manner, each end of the bristle extends from the upper surface in a manner that will be described in more detail below. A-type tufts may be the same as or different from B-type tufts. For example, A-type tufts may consist of bristles having a first set of dimensions (length, diameter, width, degree of tip processing, etc.) and B-type tufts may consist of bristles having a second set of dimensions, in which the first and second sets of dimensions may be the same as or different from each other.

As illustrated in FIG. 2, the bristle tufts 210 are arranged along three concentric virtual circles 221, 222, 223, having respective diameters d₁, d₂, d₃. The rotating disk 200 has a diameter dᵣ, and each bristle tuft 210 of the rotating disk 200 has a diameter dₜ. Along each virtual circle 221-223, bristle tufts 210 are disposed at regular angular intervals. As particularly illustrated, four bristle tufts 210 exist along the inner virtual circle such that they are disposed at intervals θ₁ of 90°; ten bristle tufts 210 exist along the intermediate virtual circle such that they are disposed at intervals θ₂ of 36°; and sixteen bristle tufts 210 exist along the outer virtual circle such that they are disposed at intervals θ₃ of 22.5°. Generally, the rotating disk 200 is configured to oscillate to a predetermined maximum rotational displacement (for example, 36°) in either direction. The above angular dimensions are exemplary, and various aspects of the present disclosure may utilize different angular arrangements of the bristle tufts 210.

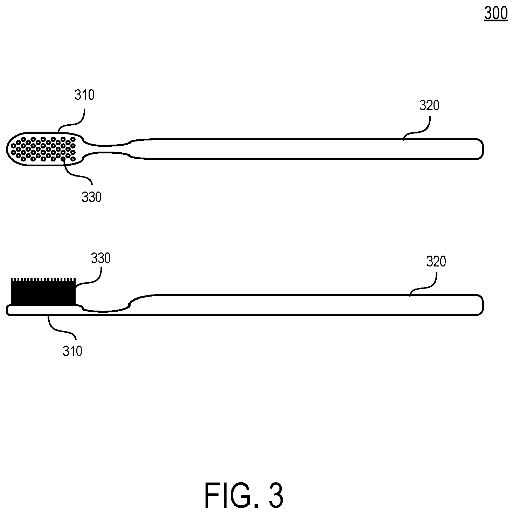

FIG. 3 illustrates another exemplary toothbrush 300 according to various aspects of the present disclosure in both a top plan view and a front elevational view. More particularly, the toothbrush 300 is a manual toothbrush. The toothbrush 300 includes a bristle head 310 and a handle 320 that are of a unitary construction. A plurality of bristle tufts 330, each including a plurality of bristles, are disposed in the bristle head 310. The handle 320 may include surface features such as a rubberized grip formed therein or thereon.

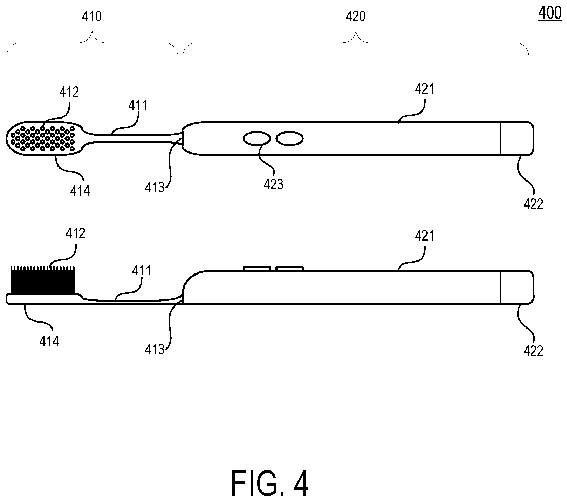

FIG. 4 illustrates another exemplary toothbrush 400 according to various aspects of the present disclosure in both a top plan view and a front elevational view. More particularly, the toothbrush 400 is a vibratory toothbrush. The toothbrush 400 includes a bristle head section 410 and a handle section 420 that are removably attached to one another. The bristle head section 410 comprises a bristle carrier 411 and a plurality of bristle tufts 412. The bristle carrier 411 extends longitudinally from a handle end 413 to a head end 414. The handle end 413 is configured to connect to the handle section 420. The plurality of bristle tufts 412 are disposed in the head end 414.

The handle section 420 comprises a housing 421 and a cap 422. The cap 422 is removable so that a battery may be placed in or removed from the interior of the housing 421. A waterproof seal (not illustrated) may be disposed between the cap 422 and the housing 421 to prevent the entry of water. A power switch 423 is disposed on the housing 421. The power switch 423 may be a push-button type, a slide-actuator type, a rocker type, a touch-sensing type, and the like. When actuated, the power switch 423 causes power to be supplied from the battery to a motor disposed within the housing 421 to generate motion, such as vibratory motion.

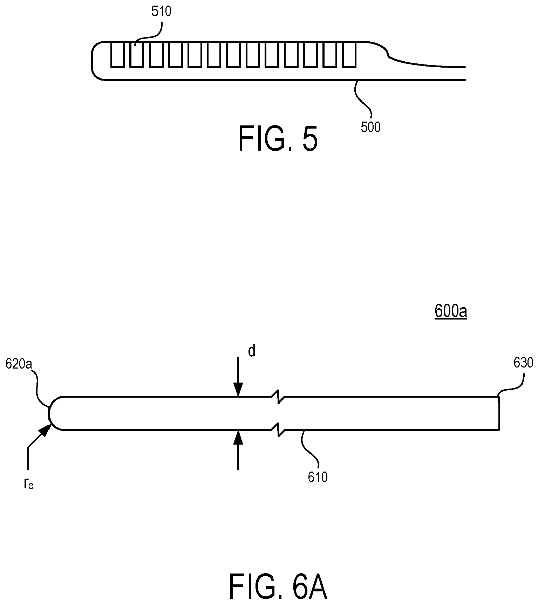

FIG. 5 illustrates a partial cross-sectional view of a tufting arrangement for use with each of the exemplary toothbrushes described above, so as to illustrate how the various bristle tufts are attached. Specifically, FIG. 5 illustrates a bristle carrier 500 such as the bristle head 310 of the toothbrush 300 or the head end 414 of the toothbrush 400. However, the bristle tufts 113 of the toothbrush 100 may be attached to the rotating disk 112 in a manner that is the same as or similar to the manner illustrated in FIG. 5 and described here. The bristle carrier 500 includes a plurality of tuft holes 510 arranged therein. Each tuft hole 510 is sized to receive a bristle tuft.

### Bristles

FIGS. 6A-B, 7, and 9 illustrate exemplary bristles that may comprise the bristle tufts, and the manner in which they may be disposed in the tuft holes 510 of the bristle carrier 500. FIGS. 6A-B respectively illustrate an exemplary bristle 600a/600b, a plurality of which may constitute a bristle tuft. The bristle 600a/600b respectively includes a bristle shaft 610 having a diameter d, and which extends between a respective first end 620a/620b and a second end 630. The bristle 600a/600b is preferably formed of a polymer or copolymer material, such as a polyamide, polybutylene terephthalate (PBT), polytrimethylene terephthalate (PTT), a PBT/PTT copolymer, and the like. The diameter d of the bristle shaft 610 is between 3 mil (1 mil = 1/1000 in.) and 9 mil, inclusive. Preferably, the diameter d of the bristle shaft 610 is between 4 mil and 8 mil, inclusive. The bristle 600a/600b has a configuration in which the first end 620a/620b has been subjected to an end-rounding processing and the second end 630 has not been subject to additional processing (that is, the second end 630 is "raw"). The bristles 600a and 600b differ from one another in the degree of end-rounding to which the first end 620a/620b has been subjected. In some aspects of the present disclosure, the second end 630 may be subjected to an end-rounding processing.

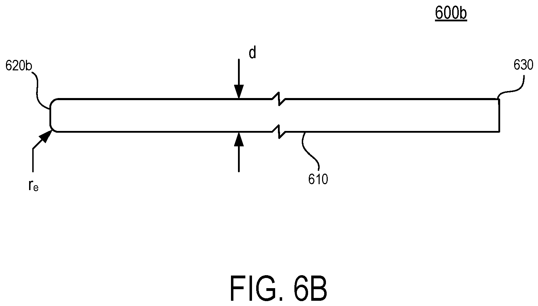

The degree of end-rounding may be expressed as a ratio between the radius d/2 of the bristle 600a/600b and the radius of curvature rₑ of the first end 620a/620b, expressed as a percentage; that is, as rₑ / (d/2) × 100. FIG. 6A illustrates full end-rounding, in which the radius of curvature rₑ is equal to the radius d/2 of the bristle 600a. Thus, the degree of end-rounding in the bristle 600a is 100%. FIG. 6B illustrates an example of partial end-rounding, in which the radius of curvature rₑ is less than the radius d/2 of the bristle 600b. In the particular illustration of FIG. 6B, the radius of curvature rₑ is half of the radius d/2 of the bristle 600b, and the degree of end-rounding in the bristle 600b is thus 50%. Bristles in accordance with various aspects of the present disclosure may have a degree of end-rounding for the first end 620a/620b between 40% and 100%, inclusive. Preferably, the degree of end-rounding for the first end 620a/620b is between 40% and 70%, inclusive. In aspects of the present disclosure in which the second end 630 is subjected to an end-rounding processing, the degree of end-rounding for the second end 630 may be the same as or less than the degree of end-rounding for the first end 620a/620b. The end-rounding process is described in more detail below.

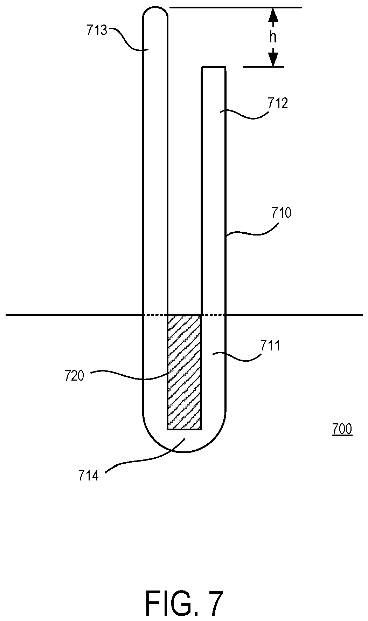

FIG. 7 illustrates an exemplary tufting arrangement of a bristle, where for purposes of illustration the bristle is constructed as described for the bristle 600a. Specifically, FIG. 7 illustrates a bristle carrier 700, to which a bristle 710 has been attached using a fastener 720. The fastener 720 may be, for example, a staple. While FIG. 7 illustrates only a single bristle 710 for clarity, in practice a plurality of bristles 710 are grouped into tufts and attached to the bristle carrier 700 with a single fastener 720. The exact number of bristles 710 within a single tuft may be dependent on the diameter of each bristle 710 and/or the type of toothbrush (*e.g.*, powered, manual, vibratory). For example, if the bristle diameter is 3-9 mil, 10-139 of the bristles 710 may be included in a tuft. If the bristle diameter is 4-8 mil, 13-78 of the bristles 710 may be included in a tuft. As illustrated, the bristle 710 includes a bristle shaft 711 extending between a first end 712 and a second end 713. To fasten the bristle 710 within a tufting hole (not shown) of the bristle carrier 700, the fastener 720 is positioned at an attachment point 714 along the bristle shaft 711 that is offset from the midpoint of the bristle shaft 711, and the bristle 710 is secured by the fastener 720 within the tufting hole.

As fastener 720 extends into the tufting hole, the fastener 720 and the bristle carrier 700 act on the bristle 710 at the attachment point 714 to cause the first end 712 and the second end 713 to extend in a direction substantially perpendicular to the surface of the bristle carrier 700. Each of the first end 712 and the second end 713 extend from the surface of the bristle carrier 700 by a distance that may be related to the type of toothbrush and the size of the toothbrush head in which the bristle 710 resides. For example, the distance may be determined according to the expression d_{bt} = α × dₕ. In this expression, d_{bt} refers to the "bristle tip distance," which is the distance between the upper surface of bristle carrier 700 and the taller end of bristle 710 (as illustrated in FIG. 7, second end 713); dₕ refers to the "head dimension," which is the largest diameter of the bristle head (for example, the head length for a rectangular or elliptical brush head or the head diameter for a circular brush head); and α is a proportionality factor having a value between 0.5 and 0.8, inclusive. Preferably, α has a value between 0.6 and 0.7, inclusive. The above dimensions may be subject to a manufacturing tolerance of, for example, ±1 mm.

In any event, because the attachment point 714 is not located at the midpoint of the bristle shaft 711, a height difference h exists between the first end 712 and the second end 713. This tufting is referred to as a "J-hook" configuration due to the presence of the height difference h. For comparison, a tufting in which no height difference exists is referred to as a "U-hook" configuration. The ability of a bristle to access difficult-to-reach areas is improved by the particular height difference h. This ability may be measured by interproximal access efficacy (IAE), which measures the ability to access interproximal areas such as those between teeth.

The height difference h is greater than 0.5 mm or, preferably, is between 2 and 4 mm. If the height difference h is too small, various cleaning attributes of the bristle 710, such as IAE, are diminished. Moreover, if the height difference h is in the above range, the bristle tufts feel softer to a user, at least because the density of bristles at the trim level (the level of the second end 713) is reduced as compared to a bristle tuft with no height difference h.

To demonstrate the superior efficacy of bristles according to various aspects of the present invention, various toothbrush samples were prepared, denoted Example 1, Comparative Example 1, and Comparative Example 2. Bristles for each of the samples were prepared from a filament having a diameter of 6 mil. In Example 1, a plurality of bristles was combined into tufts which were attached to the toothbrush with a J-hook configuration, such as the configuration of FIG. 7, and then subjected to an end-rounding process on one end of the bristles in the resulting tuft with the other end being left raw. The bristles for Comparative Example 1 were prepared in the same manner as for Example 1; however, in Comparative Example 1, the plurality of bristles was combined into tufts which were attached to the toothbrush with a U-hook configuration. In Comparative Example 2, the bristles were prepared by performing a tapering process on both sides of the resulting bristle. In Comparative Example 2, the plurality of bristles was combined into tufts which were attached to the toothbrush with a U-hook configuration.

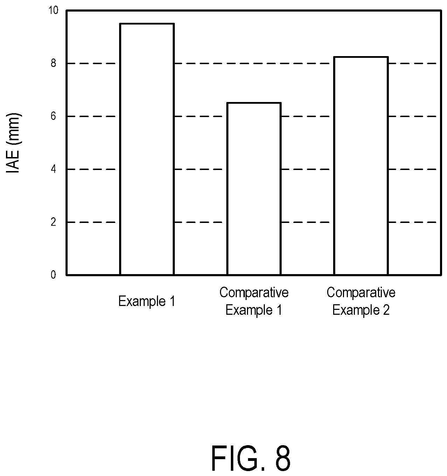

Example 1 and Comparative Examples 1 and 2 were subjected to testing to determine the IAE of each sample. Tests were performed both for simulated anterior teeth and simulated posterior teeth. IAE is here defined as the maximum width of the plaque deposit removed, in mm. The results of the test are illustrated in FIG. 8. As shown in FIG. 8, Example 1 exhibits superior IAE as compared to both Comparative Example 1 and Comparative Example 2.

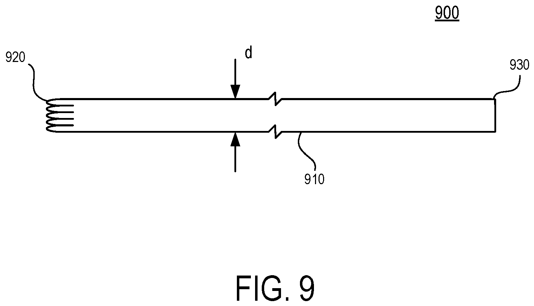

FIG. 9 illustrates another exemplary bristle 900, a plurality of which may constitute a bristle tuft. The bristle 900 includes a bristle shaft 910 having a diameter d, and which extends between a first end 920 and a second end 930. The bristle 900 is preferably formed of a polymer or copolymer material, such as a polyamide, polybutylene terephthalate (PBT), polytrimethylene terephthalate (PTT), a PBT/PTT copolymer, and the like. The diameter d of the bristle shaft 910 is between 3 mil (1 mil = 1/1000 in.) and 9 mil, inclusive. Preferably, the diameter d of the bristle shaft 910 is between 4 mil and 8 mil, inclusive. The bristle 900 has a configuration in which the first end 920 has been subjected to a feathering processing and the second end 930 has not been subject to additional processing (that is, the second end 930 is "raw"). In some aspects of the present disclosure, the second end 930 may be subjected to an end-rounding processing.

### Bristle Formation and Processing

In order to form a bristle, such as the bristles described above, a substantially cylindrical filament may be provided which has a length that is many times the length of a finished bristle. A filament may be considered substantially cylindrical if, in cross-section, it is an ellipse having an eccentricity of 0.2 or less. The filament may be cut to provide a plurality of unshaped bristles each having a first end and a second end with a shaft therebetween. After forming the plurality of unshaped bristles, the unshaped bristles are grouped and attached to a head of a toothbrush (such as the toothbrushes 100, 300, or 400) using a fastener at a fastening point along the shaft of the unshaped bristles, thereby to create a bristle tuft. The fastening point is located nearer to a second end than to a first end; thus, the first end extends from a surface of the head to a first height and the second end extends from the surface of the head to a second height, in which the first height is greater than the second height. Subsequently, for the unshaped bristles in the tuft, the first end is shaped by either an end-rounding process (as in the exemplary bristle 600) or a feathering process (as in the exemplary bristle 900). The second end may be left raw or may be subject to a degree of processing equal to or less than the first end.

The end-rounding process includes grinding a tip of the first end of an unshaped bristle, polishing the tip of the first end of the unshaped bristle, or a combination of grinding and polishing the tip of the first end of the unshaped bristle. The grinding and/or polishing may be effected through the application to the first end of a disc which rotates at a high angular velocity and thus mechanically shapes the unshaped bristle.

The end-rounding process is in contrast with a tapering process, which is not performed on bristles in accordance with the present disclosure. The tapering processing is typically categorized as either chemical or mechanical. In a mechanical tapering process, grinding, polishing, or a combination of grinding and polishing may be performed; however, these processes are performed on both the tip and the sides of an end of the unshaped bristle. In contrast with the end-rounding process of the present disclosure, a mechanical tapering process would result in a sharper, more needle-shaped, profile.

The feathering process (sometimes called a "flagging" or "branching" process) is a process by which an end of the unshaped bristle is split into multiple smaller tips. This may be effected through the application to the first end of one or more cutting implements such as blades.

In contrast to the above end-rounding or feathering processing, a bristle end (such as the second end 630 or the second end 930) is "raw" if it has not been subject to substantial shaping subsequent to the formation of the bristle. In some aspects of the present disclosure, a bristle end is considered raw if it has not been subjected to end-rounding processing, tapering processing, or feathering processing after cutting. That is, a completely unshaped bristle end is equivalent to a degree of end-rounding of 0%. In other aspects of the present disclosure, a bristle end is considered raw if it has been subjected to a degree of end-rounding of 10% or less.

The toothbrush and bristle as described in the foregoing disclosure may be embodied in any one or more of the following configurations:
(1) A toothbrush, comprising: a handle; a head connected to the handle; and a plurality of bristles, respective ones of the plurality of bristles including: a first end having a first shape formed by an end-rounding process, a second end having a second shape, and a substantially cylindrical shaft extending between the first end and the second end, wherein respective ones of the plurality of bristles are fastened to the head by a fastener at a fastening point along the shaft, the fastening point being located nearer to the second end than to the first end such that the first end extends from a surface of the head to a first height and the second end extends from the surface of the head to a second height, and wherein the first height is greater than the second height.
(2) The toothbrush according to (1), wherein the end-rounding process includes grinding a tip of a respective bristle, polishing the tip of the respective bristle, or a combination of grinding and polishing the tip of the respective bristle.
(3) The toothbrush according to (1) or (2), wherein a difference between the first height and the second height is at least 0.5 mm.
(4) The toothbrush according to (3), wherein the difference between the first height and the second height is between 2 mm and 4 mm, inclusive.
(5) The toothbrush according to any one of (1) to (4), wherein respective ones of the plurality of bristles have a base diameter at the fastening point, and the base diameter is between 3 mil and 9 mil, inclusive.
(6) The toothbrush according to (5), wherein corners of the first end are rounded with a radius of between 40% and 100%, inclusive, of the base diameter.
(7) The toothbrush according to (6), wherein the corners of the first end are rounded with a radius of between 40% and 70%, inclusive, of the base diameter.
(8) The toothbrush according to any one of (1) to (7), wherein respective ones of the plurality of bristles are formed from at least one of a polymer or a copolymer.
(9) The toothbrush according to any one of (1) to (8), wherein the plurality of bristles are grouped into a plurality of tufts, each of the plurality of tufts including between 10 and 139 bristles, inclusive.
(10) The toothbrush according to any one of (1) to (9), wherein the fastener is a staple.
(11) A method of manufacturing a toothbrush, comprising: providing a plurality of unshaped bristles, respective ones of the plurality of unshaped bristles having a first end, a second end, and a substantially cylindrical shaft between the first end and the second end; attaching the respective ones of the plurality of unshaped bristles to a head of the toothbrush using a fastener at a fastening point along the shaft, the fastening point being located nearer to the second end than to the first end such that the first end extends from a surface of the head to a first height and the second end extends from the surface of the head to a second height; and performing an end-rounding process on the first end of the respective ones of the plurality of unshaped bristles, thereby to create a plurality of shaped bristles, wherein the first height is greater than the second height.
(12) The method according to (11), wherein the end-rounding process includes grinding a tip of a respective unshaped bristle, polishing the tip of the respective unshaped bristle, or a combination of grinding and polishing the tip of the respective unshaped bristle.
(13) The method according to (11) or (12), wherein a difference between the first height and the second height is at least 0.5 mm.
(14) The method according to (13), wherein a difference between the first height and the second height is between 2 mm and 4 mm, inclusive.
(15) The method according to any one of (11) to (14), wherein respective ones of the plurality of bristles have a base diameter at the fastening point, and the base diameter is between 3 mil and 9 mil, inclusive.
(16) The method according to (15), wherein corners of the first end are rounded with a radius of between 40% and 100%, inclusive, of the base diameter.
(17) The method according to (16), wherein the corners of the first end are rounded with a radius of between 40% and 70%, inclusive, of the base diameter.
(18) The method according to any one of (11) to (17), wherein respective ones of the plurality of bristles are formed from at least one of a polymer or a copolymer.
(19) The method according to any one of (11) to (18), wherein the plurality of bristles are grouped into a plurality of tufts, each of the plurality of tufts including between 10 and 139 bristles, inclusive.
(20) A toothbrush, comprising: a handle; a head connected to the handle; and a plurality of bristles, respective ones of the plurality of bristles including: a first end having a first shape formed by a feathering process, a second end having a second shape, and a substantially cylindrical shaft extending between the first end and the second end, wherein respective ones of the plurality of bristles are fastened to the head by a fastener at a fastening point along the shaft, the fastening point being located nearer to the second end than to the first end such that the first end extends from a surface of the head to a first height and the second end extends from the surface of the head to a second height, and wherein the first height is greater than the second height.

With regard to the processes, systems, methods, heuristics, etc. described herein, it should be understood that, although the steps of such processes, etc. have been described as occurring according to a certain ordered sequence, such processes could be practiced with the described steps performed in an order other than the order described herein. It further should be understood that certain steps could be performed simultaneously, that other steps could be added, or that certain steps described herein could be omitted. In other words, the descriptions of processes herein are provided for the purpose of illustrating certain embodiments, and should in no way be construed so as to limit the claims.

Accordingly, it is to be understood that the above description is intended to be illustrative and not restrictive. Many embodiments and applications other than the examples provided would be apparent upon reading the above description. The scope should be determined, not with reference to the above description, but should instead be determined with reference to the appended claims, along with the full scope of equivalents to which such claims are entitled. It is anticipated and intended that future developments will occur in the technologies discussed herein, and that the disclosed systems and methods will be incorporated into such future embodiments. In sum, it should be understood that the application is capable of modification and variation.

All terms used in the claims are intended to be given their broadest reasonable constructions and their ordinary meanings as understood by those knowledgeable in the technologies described herein unless an explicit indication to the contrary in made herein. In particular, use of the singular articles such as "a," "the," "said," etc. should be read to recite one or more of the indicated elements unless a claim recites an explicit limitation to the contrary.

The Abstract of the Disclosure is provided to allow the reader to quickly ascertain the nature of the technical disclosure. It is submitted with the understanding that it will not be used to interpret or limit the scope or meaning of the claims. In addition, in the foregoing Detailed Description, it can be seen that various features are grouped together in various embodiments for the purpose of streamlining the disclosure. This method of disclosure is not to be interpreted as reflecting an intention that the claimed embodiments require more features than are expressly recited in each claim. Rather, as the following claims reflect, inventive subject matter lies in less than all features of a single disclosed embodiment. Thus the following claims are hereby incorporated into the Detailed Description, with each claim standing on its own as a separately claimed subject matter.

## Claims

1. A toothbrush, comprising:
a handle;
a head connected to the handle; and
a plurality of bristles, respective ones of the plurality of bristles including:
a first end having a first shape formed by an end-rounding process,
a second end having a second shape, and
a substantially cylindrical shaft extending between the first end and the second end,
wherein respective ones of the plurality of bristles are fastened to the head by a fastener at a fastening point along the shaft, the fastening point being located nearer to the second end than to the first end such that the first end extends from a surface of the head to a first height and the second end extends from the surface of the head to a second height, and
wherein the first height is greater than the second height.

2. The toothbrush according to claim 1, wherein the end-rounding process includes grinding a tip of a respective bristle, polishing the tip of the respective bristle, or a combination of grinding and polishing the tip of the respective bristle.

3. The toothbrush according to claim 1, wherein a difference between the first height and the second height is at least 0.5 mm.

4. The toothbrush according to claim 3, wherein the difference between the first height and the second height is between 2 mm and 4 mm, inclusive.

5. The toothbrush according to claim 1, wherein
respective ones of the plurality of bristles have a base diameter at the fastening point, and the base diameter is between 3 mil and 9 mil, inclusive.

6. The toothbrush according to claim 5, wherein corners of the first end are rounded with a radius of between 40% and 100%, inclusive, of the base diameter.

7. The toothbrush according to claim 6, wherein the corners of the first end are rounded with a radius of between 40% and 70%, inclusive, of the base diameter.

8. The toothbrush according to claim 1, wherein respective ones of the plurality of bristles are formed from at least one of a polymer or a copolymer.

9. The toothbrush according to claim 1, wherein the plurality of bristles are grouped into a plurality of tufts, each of the plurality of tufts including between 10 and 139 bristles, inclusive.

10. The toothbrush according to claim 1, wherein the fastener is a staple.

11. A method of manufacturing a toothbrush, comprising:
providing a plurality of unshaped bristles, respective ones of the plurality of unshaped bristles having a first end, a second end, and a substantially cylindrical shaft between the first end and the second end;
attaching the respective ones of the plurality of unshaped bristles to a head of the toothbrush using a fastener at a fastening point along the shaft, the fastening point being located nearer to the second end than to the first end such that the first end extends from a surface of the head to a first height and the second end extends from the surface of the head to a second height; and
performing an end-rounding process on the first end of the respective ones of the plurality of unshaped bristles, thereby to create a plurality of shaped bristles,
wherein the first height is greater than the second height.

12. The method according to claim 11, wherein the end-rounding process includes grinding a tip of a respective unshaped bristle, polishing the tip of the respective unshaped bristle, or a combination of grinding and polishing the tip of the respective unshaped bristle.

13. The method according to claim 11, wherein a difference between the first height and the second height is at least 0.5 mm.

14. The method according to claim 13, wherein a difference between the first height and the second height is between 2 mm and 4 mm, inclusive.

15. A toothbrush, comprising:
a handle;
a head connected to the handle; and
a plurality of bristles, respective ones of the plurality of bristles including:
a first end having a first shape formed by a feathering process,
a second end having a second shape, and
a substantially cylindrical shaft extending between the first end and the second end,
wherein respective ones of the plurality of bristles are fastened to the head by a fastener at a fastening point along the shaft, the fastening point being located nearer to the second end than to the first end such that the first end extends from a surface of the head to a first height and the second end extends from the surface of the head to a second height, and
wherein the first height is greater than the second height.
